# EUROPEAN PATENT APPLICATION

(11) **EP 0 877 318 A1**
(43) Date of publication of application: **11.11.1998**
(21) Application number: 98103128.9
(22) Date of filing: 23.02.1998
(51) Int. Cl.: G06F 9/44, G06F 17/60

(54) **Documentation generation**

(30) Priority: 08.05.1997 GB 9709278
(71) Applicant: INTERNATIONAL COMPUTERS LIMITED, Putney, London, SW15 1SW (GB)
(72) Inventor: Johnson, Kevin, Barnton, Northwich, Cheshire, CW8 4UT (GB)
(74) Representative: Guyatt, Derek Charles

(57) **Abstract**

A method for generating documentation for a computer-implemented process model, uses a computer to read definition files defining the model, and automatically generates a report file presenting the contents of the definition files in a form more readily comprehensible to a human user. For example, the method may use line drawing characters to form boxes, to group together related items of information, such as information describing a procedure step. The method may also add text labels to data items and column headings to tables, to improve readability. The method may also perform consistency checks on the definition files, for example by checking that fields used in one file are properly defined in another file. The method may also generate check information, such as a table showing the number of times each defined field is used in procedure steps. The method may also generate a warning file containing information about exception conditions detected during generation of the report file.

## Description

### Background to the Invention

This invention relates to a method and apparatus for generation of documentation for a computer-implemented process model.

A computer-implemented process model, such as for example a Staffware application, generally includes a set of definition files, defining procedure steps, fields and so on. A problem with this is that these definition files are usually in a format which may not be easily understandable by a human user.

The object of the present invention is to provide a way of overcoming or alleviating this problem.

### Summary of the Invention

According to the invention there is provided a method of generating documentation for a computer-implemented process model, the method comprising using a computer to read definition files defining the model, and to automatically generate a report file presenting the contents of the definition files in a form more readily comprehensible to a human user.

For example, the method may use line drawing characters to form boxes, to group together related items of information, such as information describing a procedure step. The method may also add text labels to data items and column headings to tables, to improve readability. The method may also perform consistency checks on the definition files, for example by checking that fields used in one file are properly defined in another file. The method may also generate check information, such as a table showing the number of times each defined field is used in procedure steps. The method may also generate a warning file containing information about exception conditions detected during generation of the report file.

### Brief Description of the Drawings

Figure 1 is a block diagram of a computer system implementing an embodiment of the present invention.

Figure 2 is a flow chart of a report generator program.

Figure 3 is a flow chart showing one of the steps of Figure 2 in more detail.

Figure 4 is a diagram showing part of a typical Staffware "pro" file defining a particular procedure step.

Figure 5 is a diagram showing part of a typical report file produced by the report generator.

### Description of an Embodiment of the Invention

One method in accordance with the invention will now be described by way of example with reference to the accompanying drawings.

### General

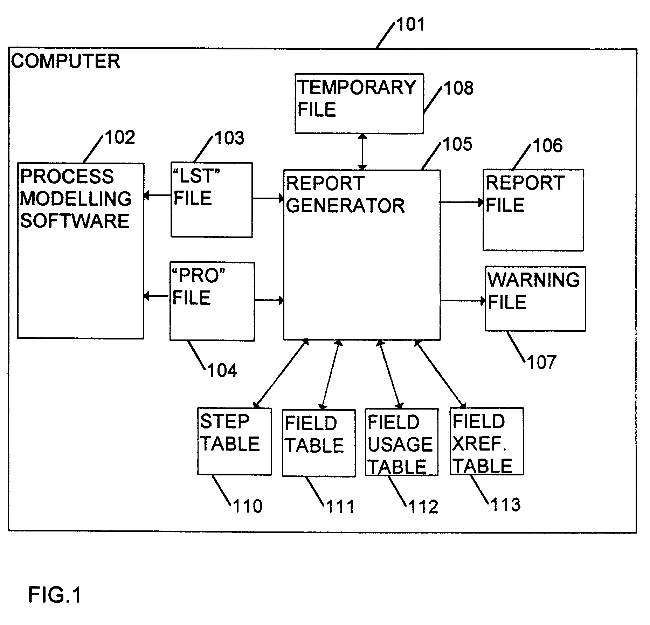

Figure 1 shows a conventional personal computer (PC) system 101, which includes the known Staffware process modelling software 102. The Staffware software makes use of a number of Staffware definition files, which define a particular process model. These files include a "1st" file 103, and a "pro" file 104.

The PC system also includes a report generator program 105. In operation, the report generator program extracts information from the definition files 103, 104 and uses this information to generate a report file 106, which summarises the contents of the definition files in a form more readily comprehensible to a human user. The report generator 105 also generates a warning file 107, containing information about exception conditions detected during generation of the report file.

In operation, the report generator uses a temporary file 108, and a set of tables. The tables comprise a step table 110, a field table 111, a field usage table 112, and a field cross-reference table 113.

### Format of the "1st" file

The "1st" file defines the procedure steps and fields used in the process model. The file comprises a sequence of records.

The first record is a header record, which contains information about the process model, including the following items: number of procedure steps, number of fields, number of composite fields, number of memo fields, and version number.

The header is followed by one or more step records, one for each defined procedure step. Each step record contains information including the following items: step name, step description, internal step sequence number, step form length, and step type.

The step records are followed by one or more field records, one for each defined field. Each of the field records contains information including the following items: field name, field type, and field length.

### Format of the "pro" file

The "pro" file is an ASCII text file, consisting of one or more procedure step definitions, defining the procedure steps in the process model. The start of each procedure step definition is indicated by the character ">" at the beginning of a line, followed by the step name in the same line. This is followed by one or more definition sections.

Each definition section comprises a line containing the character "#" and a keyword (PROCESS, ADDRESSEES, ACTIONS, FILES, DEADLINES, DEDACTS, or DOCUMENT), followed by one or more record lines, and terminated by a line containing only the character "#".

DOCUMENT section records have the format
C, F, 〈form text or field definition〉
where F is a flag value, which indicates whether the record represents a field definition or form text, and C is a column count indicating the position of the text or field.

### Report generator

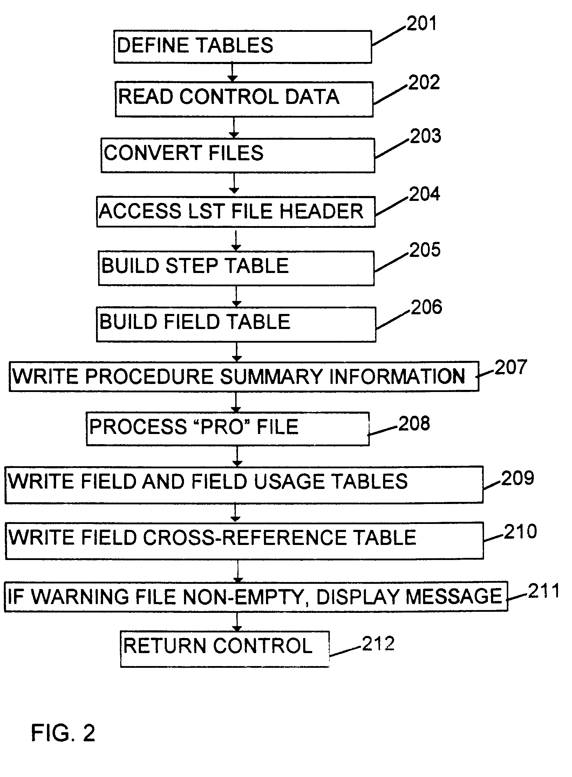

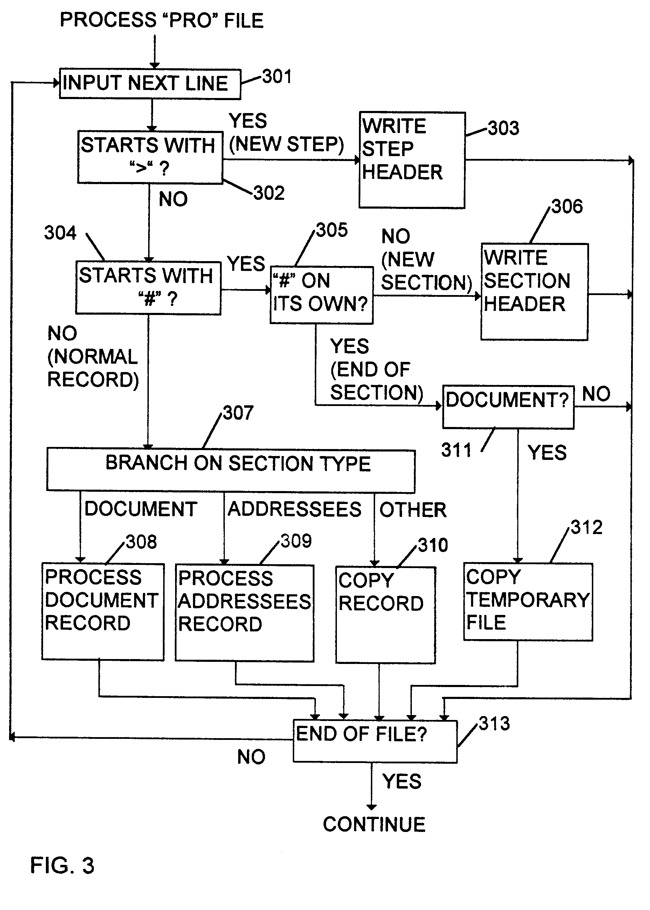

Figure 2 is a flow chart of the report generator program.
(Step 201) The report file generator defines and initialises the tables 110 - 113.
(Step 202) The report file generator then reads a number of environmental variables, including the name of the directory in which the Staffware definition files are held, and the name of the Staffware procedure.
(Step 203) The report file generator then reads each of the Staffware definition files in turn, and converts them into file record format.
(Step 204) The report file generator then reads the header of the "1st" file, and extracts the values of the number of steps and number of fields.
(Step 205) The report file generator then builds the step table as follows. First, it redimensions the step table, so that it has one entry for each of the defined number of steps. It then reads each step record in turn from the "1st" file, extracts the step information, and stores this information in the step table.
(Step 206) The report file generator then builds the field table, as follows. First, it redimensions the field table, so that it has one entry for each of the defined number of fields. It then reads each field record in turn from the "1st" file, extracts the field information, and stores this information in the field table.
   The field usage table and field cross-reference table are also redimensioned at this stage. The field usage table contains a usage count value for each field, indicating the number of times the field is referenced by different procedure steps in the process model. The field cross-reference table contains a usage count value for each combination of field and procedure step, indicating the number of times the field is referenced by the procedure step. At this stage, both these tables are empty.
(Step 207) The report file generator then writes procedure summary information to the report file. This includes the following data items: procedure name, version number, number of steps, number of fields, number of composite fields, and number of memo fields. Each of these items is preceded by an appropriate text label, such as "Name of Procedure", so as to improve the readability of the report file.
   The procedure summary information also includes a tabular listing of the contents of the step table, with appropriate column headings: "NAME", "DESCRIPTION", "INTERNAL SEQU No.", "TYPE" and "FORM LENGTH". Each procedure step is tagged with a sequential reference number.
(Step 208) The report file generator then processes the converted "pro" file. This involves writing information about each of the procedure steps to the report file. Also, the usage counts in the field usage table and field cross-reference tables are updated. If any exception conditions are detected, a warning message is written to the warning file. The processing of the "pro" file is described in more detail below with reference to Figure 3.
(Step 209) The report file generator then writes the contents of the field table and the field usage table to the report file, as a table with appropriate column headings, including "Field_Name", "Type", "Size", and "Use_Count".
(Step 210) The report file generator then writes the contents of the field cross-reference table to the report file, to show the number of field references by each procedure step.
(Step 211) If the warning file is non-empty, the report file generator displays a screen message that warning messages have been written to the warning file.
(Step 212) Finally, the report file generator returns control to the operating system.

### Processing of the "pro" file

Figure 3 is a flowchart showing the processing of the "pro" file in more detail.

This comprises a DO WHILE loop (Steps 301-313), in which the report generator reads each line of the "pro" file in turn.

If the first character in the line is ">", this is the start of a new procedure step. In this case (Step 303), the report generator looks up the step table, to obtain details of the procedure step, and writes a procedure step header to the report file. The step header includes the following data items: step name, step description, step type information, and step reference number. The step type information, which is expressed as a compact code in the "pro" file, is converted to readable text.

If the procedure step is not found in the step table, a message is written to the warning file, containing the step name and the text "Not found in step list".

If the first character in the line is "#", followed by a keyword, this is the start of a new definition section. In this case (Step 306), the report generator writes the a section header to the report file. The section header includes the section keyword.

If the first character in the line is neither ">" nor "#", this line is a normal section record. In this case, the action of the report generator depends on the section type, as defined by the keyword at the start of the section. If the section is a DOCUMENT section, the report generator performs a document record processing routine (Step 308). If the section is an ADDRESSEES section, the report generator performs an addressees record processing routine (Step 309). Otherwise, the report generator simply copies the current line of the "pro" file to the report file (Step 310).

The document record processing routine (Step 308) involves checking the value of the flag character F in the record. If the flag character is zero (indicating that the current line is form text) the form text is written to the report file, preceded by a line number. The form text is then checked for the presence of embedded fields, and if any is found, the field table is checked to ensure that an entry for this field exists. Assuming that an entry exists, the field use table and field cross-reference tables are updated. If however no entry is found, a message is written to the warning file, containing the field name, the step number, and the message "Not found in field list".

If, on the other hand, the flag character F is non-zero (indicating that the current line is a field definition), the following actions are performed. First, if the temporary file is currently empty, table headings "Line", "Field", "Use", "Validations" and "List/Value" are written to the temporary file. One or more lines of text, derived from the current field definition, are then written under these headings to the temporary file. Thus, the field definitions in the procedure are buffered in a table in the temporary file.

The addressees record processing routine (Step 309) extracts information regarding the addressees from the line, and writes this information to the report file (Step 309)

If the line consists only of the character "#", this is the end of the current definition section. In this case, the report generator checks whether this section was a DOCUMENT section (Step 311). If so, and the temporary file is not empty, the contents of the temporary file are copied to the report file (Step 312). Thus, the field definitions, which have been buffered in the temporary file, are transferred to the report file as a block, following the form text lines. Following this, the temporary file is cleared.

It will be appreciated that the report generator may also process other types of definition file, such as the Staffware "GWD" and "staffp" files, to produce further information for the report file.

### Text Boxes

One feature that has not been described so far is that the report generator automatically inserts line drawing characters as it writes to the report file, so as to form boxes grouping together related items of information in the report file. The line drawing characters may for example comprise horizontal and vertical lines ("-", "|"), box corners (" 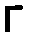 ", " 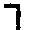 ", " 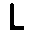 ", " 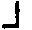 ") and T shapes (" 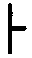 ", " 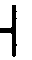 "). Alternatively, if these characters are not available, the characters "-", "|" and "+" may be used to draw the boxes.

### Example

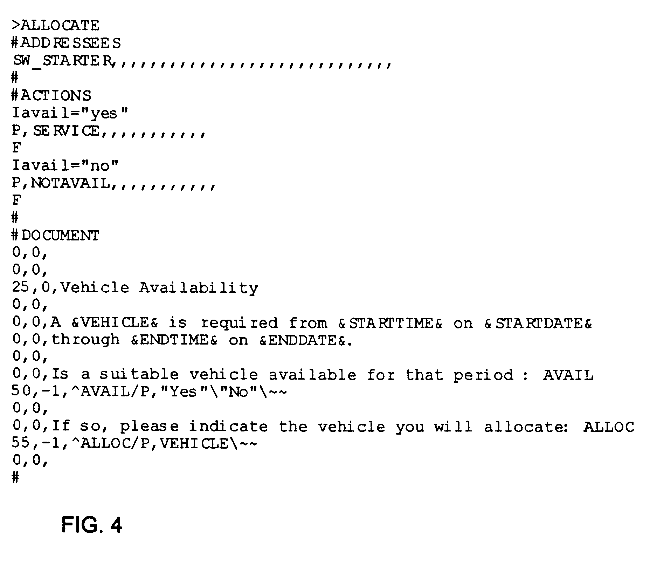

As an example, Figure 4 shows a procedure step definition forming part of a typical "pro" file. The definition is for a procedure step called "ALLOCATE", forming part of a carpool management procedure. It can be seen that this definition contains three definition sections: an ADDRESSEES section, an ACTIONS section, and a DOCUMENT section. The DOCUMENT section consists of a number form text lines, and also includes two field definitions (recognisable by the flag "-1"), defining fields "AVAIL" and "ALLOC". It should be noted that the field definition for "AVAIL", for example, contains the symbol "P", indicating that the field is mandatory, and contains validation values "Yes" and "No". It should also be noted that some of the form text lines include embedded fields, such as "&VEHICLE&".

Figure 5 shows a corresponding part of a report file, generated from the procedure step definition of Figure 4. It can be seen that this consists of a box, divided by horizontal lines into (in this example) five sections. The first section is the procedure step header, written at Step 303 above. The next three sections are the result of processing the three definition sections of the "pro" file. The final section contains the field definitions, written from the temporary file at Step 312 above.

### Some possible modifications

It will be appreciated that many modifications may be made to the system described above without departing from the scope of the present invention. For example, the method may be implemented in various computer languages, such as Basic or VisualBasic, and may produce report files in various formats, such as text files or Microsoft Word files.

### Conclusion

It can be seen that the report generator described above reads the definition files, which are in a format that is not easily understandable to a human user, and automatically generates a report file presenting the contents of the definition files in a significantly more readable form.

The report generator may conveniently be supplied in the form of a computer-readable storage medium (such as a disk or CD-ROM) embodying program instructions for the method as described above.

## Claims

1. A method of generating documentation for a computer-implemented process model, the method comprising using a computer to read definition files defining the model, and to automatically generate a report file presenting the contents of the definition files in a form more readily comprehensible to a human user.

2. A method according to Claim 1 wherein the method writes line drawing characters into the report file, forming boxes which group together related items of information in said report file.

3. A method according to Claim 1 or 2 wherein the method adds text labels to data items, and column headings to tables, to improve readability of said report file.

4. A method according to any preceding claim wherein the method performs consistency checks on the definition files.

5. A method according to Claim 4 wherein the consistency checks comprise checking that fields used in one file are properly defined in another file.

6. A method according to any preceding claim wherein the method generates a field usage table showing the number of times each defined field is used in procedure steps.

7. A method according to any preceding claim wherein the method generates a warning file containing information about exception conditions detected during generation of the report file.

8. A method according to any preceding claim, wherein the method comprises reading a sequence of definition file records, writing the record to the report file if it represents field text, buffering the record in a temporary file if it represents a field definitions, and then, after all the records have been read, writing the contents of the temporary file as a block to the report file.

9. Computing apparatus for generating documentation for a computer-implemented process model, comprising means for using a computer to read definition files defining the model, and means for automatically generating a report file presenting the contents of the definition files in a form more readily comprehensible to a human user.
